# EUROPEAN PATENT APPLICATION

(11) **EP 4 238 615 A1**
(43) Date of publication of application: **06.09.2023**
(21) Application number: 21886276.1
(22) Date of filing: 27.10.2021
(51) Int. Cl.: A62C 3/16, H01M 50/20

(54) **FIRE EXTINGUISHING BODY AND BATTERY PACK**

(30) Priority: 02.11.2020 JP 2020183755
(71) Applicant: TOPPAN INC., Tokyo 110-0016 (JP)
(72) Inventor: KUROKAWA, Masato, Tokyo 110-0016 (JP); SHODA, Ryo, Tokyo 110-0016 (JP); TANABE, Junya, Tokyo 110-0016 (JP)
(74) Representative: Hoffmann Eitle
(86) International application number: PCT/JP2021/039681
(87) International publication number: WO 2022/092159

(57) **Abstract**

A fire extinguishing body includes a substrate and a fire extinguishing agent-containing layer facing the substrate, the substrate having a Young's modulus of 2 MPa or more.

## Description

### [Technical Field]

The present invention relates to fire extinguishing bodies and battery packs.

### [Background Art]

A technique of incorporating a film having a fire extinguishing function into a battery is known (see, for example, PTL 1). According to this technique, a material having a fire extinguishing function is wrapped with a film and provided inside a battery can, so that safety in case of an emergency is secured by the fire extinguishing function being exerted as a result of the film being broken by flames or high-temperature gas being generated as a result abnormality occurring in the battery.

### [Citation List]

### [Patent Literature]

[PTL 1] JP 2007-227171 A

### [Summary of the Invention]

### [Technical Problem]

In battery cans, particularly for in-vehicle lithium-ion battery packs, storage batteries at power plants, or the like, while the housing itself lasts for ten years and more, a typical fire extinguishing agent requires replacement for every one to five years, and a resin film, or the like, that covers the fire extinguishing agent also becomes brittle and prone to breakage within one to five years. If the fire extinguishing agent is incorporated into the battery can or the storage battery by bonding or the like, a problem arises that the fire extinguishing agent that is not to be replaced may be broken upon replacement, and thus, the fire extinguishing agent cannot be easily replaced.

The present invention has been made in view of the above-described circumstances; an object thereof is to provide a fire extinguishing body that can be easily replaced even after being loaded into a battery pack. Another object of the present invention is to provide a battery pack including such a fire extinguishing body.

### [Solution to Problem]

A fire extinguishing body according to an aspect of the present invention includes a substrate and a fire extinguishing agent-containing layer facing the substrate, the substrate having a Young's modulus of 2 MPa or more.

In another aspect, the substrate may include a resin layer.

In another aspect, the resin layer may have a Young's modulus of 2 MPa to 5 GPa.

In another aspect, the substrate may include at least one of a wood layer, a metal layer, and a glass layer.

In another aspect, each of the wood layer, the metal layer, and the glass layer may have a Young's modulus of 10 to 700 GPa.

A battery pack according to an aspect of the present invention includes a housing, the above fire extinguishing body, and a battery, the above fire extinguishing body and the battery being disposed inside the housing.

In another aspect, the battery may be a lithium-ion battery.

### [Advantageous Effects of Invention]

The present invention provides a fire extinguishing body that can be easily replaced even after being loaded into a battery pack. The present invention also provides a battery pack including such a fire extinguishing body.

### [Brief Description of Drawings]

Fig. 1 is a schematic cross-sectional view of a fire extinguishing body according to an embodiment.
Fig. 2 is a schematic cross-sectional view of a battery pack according to an embodiment.
Fig. 3 is a schematic cross-sectional view of a battery pack according to another embodiment.

### [Description of Embodiments]

Embodiments of the present invention will be described in detail below. However, the present invention is not limited to the following embodiments.

### <Fire extinguishing body>

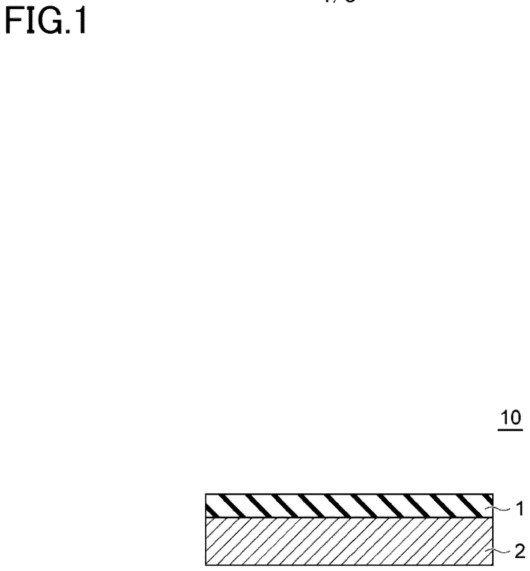

Fig. 1 is a schematic cross-sectional view of a fire extinguishing body according to an embodiment. A fire extinguishing body 10 includes a substrate 1 and a fire extinguishing agent-containing layer 2 in this order. The fire extinguishing body can be a laminate including a flat (film-like) substrate and a fire extinguishing agent-containing layer formed on the substrate.

While the thickness of the fire extinguishing body is not necessarily limited because it varies depending on its layer configuration, the thickness thereof can be, for example, 2 to 20 mm in order to make the fire extinguishing body thinner to prevent limitations on a space therefor while maintaining ease in handling. Moreover, the area of a major surface of the fire extinguishing body (surface when the fire extinguishing body is seen from above in a vertical direction) can be, for example, 9 to 620 cm² in terms of fire extinguishing performance and ease in handling.

### [Substrate]

The substrate can be formed from a material having a Young's modulus of 2 MPa or more. With the substrate having a Young's modulus of 2 MPa or more, it is possible to sufficiently ensure the strength of the fire extinguishing body and make it easy to load the fire extinguishing body into the battery pack and remove the fire extinguishing body therefrom. In terms of this, the Young's modulus of the substrate may be more preferably 2.5 MPa or more, and even more preferably 4 MPa or more. While the upper limit on the Young's modulus of the substrate is not particularly limited, the upper limit thereof can be 700 GPa in view of the case where the substrate includes a rigid base plate.

The substrate can include a resin layer. Examples of a material of the resin layer include polyolefins (such as LLDPE, PP, COP and CPP), polyesters (such as PET), fluoropolymers (such as PTFE, ETFE, EFEP, PFA, FEP and PCTFE), PVC, PVA, acrylic resins, epoxy resins, polyamides, polyimides, and the like. The substrate may include one or more resin layers formed from these materials. By selecting a transparent material, it becomes easy to examine the appearance of the fire extinguishing body and determine its replacement time. In terms of adjustment of water vapor transmission rate, the substrate may be provided with a vapor-deposited layer (an alumina-deposited layer or a silica-deposited layer) having water vapor barrier properties.

The Young's modulus of the resin layer can be 2 MPa to 5 GPa and may be more preferably 2.5 MPa to 4 GPa. This sufficiently ensures the strength of the fire extinguishing body. The Young's modulus of the resin layer can be measured in accordance with ASTM-D-882.

While the thickness of the resin layer can be selected as appropriate according to required strength, an allowed space, and the like, the thickness thereof can be, for example, 0.0045 to 1 mm and may be more preferably 0.012 to 0.1 mm.

The substrate can include a rigid base plate or, more specifically, a rigid base plate including at least one of a wood layer, a metal layer, and a glass layer (inorganic composition layer). Examples of a material of the wood layer include Japanese cedar, Japanese cypress, teak, and the like. Examples of a material of the metal layer include iron, stainless steel, tungsten superalloy, and the like.

The Young's modulus of the rigid base plate can be 10 to 700 GPa, and may be more preferably 10 to 640 GPa, and even more preferably 13 to 630 GPa. This sufficiently ensures the strength of the fire extinguishing body. The Young's modulus of the rigid base plate can be measured in accordance with JIS-Z-2280.

While the thickness of the rigid base plate can be selected as appropriate according to required strength, an allowed space, and the like, the thickness thereof can be, for example, 0.012 to 10 mm and may be more preferably 0.1 to 5 mm.

In the case where the substrate includes the resin layer and the rigid base plate, the lamination order of these in the fire extinguishing body is not particularly limited. However, in terms of ease in handling during a manufacturing process, the fire extinguishing body can include the fire extinguishing agent-containing layer, the resin layer, and the rigid base plate in this order.

### [Fire extinguishing agent-containing layer]

The fire extinguishing agent-containing layer may be, for example, a layer including a fire extinguishing agent and a binder resin. The fire extinguishing agent is not particularly limited, and an agent having at least one of the so-called four elements of fire extinguishing (removal action, cooling action, smothering action, and negative catalysis action) can be used as appropriate according to the form of a target object. Examples of the fire extinguishing agent include sand (standard sand), dry ice, water, and the like, in addition to typical fire extinguishing agents (fire-extinguishing powder agents, water-based fire-extinguishing agents, or fire-extinguishing foam agents). Examples of versatile fire extinguishing agents include ABC fire extinguishing agents, and examples of fire extinguishing agents for oil and electrical fires include BC fire extinguishing agents. In the case where a target object is a lithium-ion battery, a BC fire extinguishing agent, a water-based fire-extinguishing agent, or some other fire extinguishing agent for lithium-ion batteries is used.

As the binder resin, a thermoplastic resin and a thermosetting resin can be used. Examples of the thermoplastic resin include polyolefin resins such as polypropylene resins, polyethylene resins, poly(1-)butene resins, and polypentene resins, polystyrene resins, acrylonitrile-butadiene-styrene resins, methyl methacrylate-butadiene-styrene resins, ethylene-vinyl acetate resins, ethylene-propylene resins, polycarbonate resins, polyphenylene ether resins, acrylic resins, polyamide resins, polyvinyl chloride resins, polyvinyl alcohol (PVA), polyvinyl butyral (PVB), and the like. Examples of the thermosetting resin include rubber such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polysulfide rubber (T), silicone rubber (Q), fluororubber (FKM, FZ), and urethane rubber (U), polyurethane resins, polyisocyanate resins, polyisocyanurate resins, phenol resins, epoxy resins, and the like. The binder resin may include a curing agent component.

The fire extinguishing agent-containing layer may include one or more other components such as a colorant, an antioxidant, a fire retardant, and an inorganic filler. These components can be selected as appropriate according to the composition of the fire extinguishing agent-containing layer and the type of the binder resin.

The fire extinguishing agent-containing layer can be formed by applying a slurry including the fire extinguishing agent and binder to the substrate or can be formed by kneading the fire extinguishing agent into the resin. In other words, the fire extinguishing agent-containing layer may be a layer of the composition including the fire extinguishing agent and binder described above or a resin layer including the fire extinguishing agent. Examples of the resin into which the fire extinguishing agent is to be kneaded include, for example, polyolefin resins (such as polypropylene and polyethylene), polystyrene resins, acrylic resins, ethylene-vinyl acetate resins, polycarbonate resins, polyamide resins, polyvinyl chloride resins, fluorine-based resins, and the like.

The content of the fire extinguishing agent in the fire extinguishing agent-containing layer (on the basis of the mass of the fire extinguishing agent-containing layer) can be 70 to 97 mass%, and may be more preferably 80 to 95 mass%, and even more preferably 85 to 92 mass%. When the content of the fire extinguishing agent therein is 70 mass% or more, excellent fire extinguishing performance can be easily achieved, and when the content of the fire extinguishing agent therein is 97 mass% or less, excellent formability can be easily achieved. In the case where the fire extinguishing agent-containing layer contains one or more other components, the content of the one or more other components in the fire extinguishing agent-containing layer (on the basis of the mass of the fire extinguishing agent-containing layer) can be 10 mass% or less.

The thickness of the fire extinguishing agent-containing layer is set as appropriate according to the location where the fire extinguishing body is to be provided and the amount of the fire extinguishing agent to be blended. The thickness of the fire extinguishing agent-containing layer can be, for example, 1 mm or less, and may be more preferably 30 to 1000 µm, even more preferably 100 to 500 µm, and yet more preferably 150 to 500 µm.

### [Adhesive layer]

The fire extinguishing body may further include an adhesive layer. This makes it easy to improve the ease in handling of the fire extinguishing body and makes it easy to hold the fire extinguishing agent-containing layer stably on the substrate. The adhesive layer may be, for example, provided between the substrate and the fire extinguishing agent-containing layer, and between the resin layer and the rigid base plate in the substrate.

The adhesive layer can be selected as appropriate according to, for example, the types of the substrate and the fire extinguishing agent. The adhesive layer can be formed from, for example, a material such as an adhesive or a pressure-sensitive adhesive. The thickness of the adhesive layer may be, for example, 1 to 100 µm (1 to 30 µm or 30 to 100 µm depending on the material used).

### <Method for producing fire extinguishing body>

A production method for the fire extinguishing body is not particularly limited, and the fire extinguishing body can be produced by laminating the above-described respective layers as appropriate. The manner in which the fire extinguishing agent-containing layer is provided may be determined according to its form. For example, the fire extinguishing agent-containing layer can be formed by applying a slurry including the fire extinguishing agent and binder to the substrate. Alternatively, the fire extinguishing agent-containing layer can be formed by co-extruding, with the substrate, the resin into which the fire extinguishing agent has been kneaded. The fire extinguishing agent-containing layer and the substrate may be separately prepared and bonded to each other by lamination. Moreover, the fire extinguishing body may be obtained by processing the fire extinguishing agent-containing layer on a resin layer that can be easily handled and then bonding the resin layer and the rigid base plate.

### <Battery pack>

The battery pack includes a housing, and the above-described fire extinguishing body and a battery both disposed inside the housing. Examples of the battery include lithium-ion batteries, nickel-cadmium batteries, lithium-ion polymer secondary batteries, nickel-metal hydride batteries, and the like. The above-described fire extinguishing body can be particularly preferably used with a lithium-ion battery.

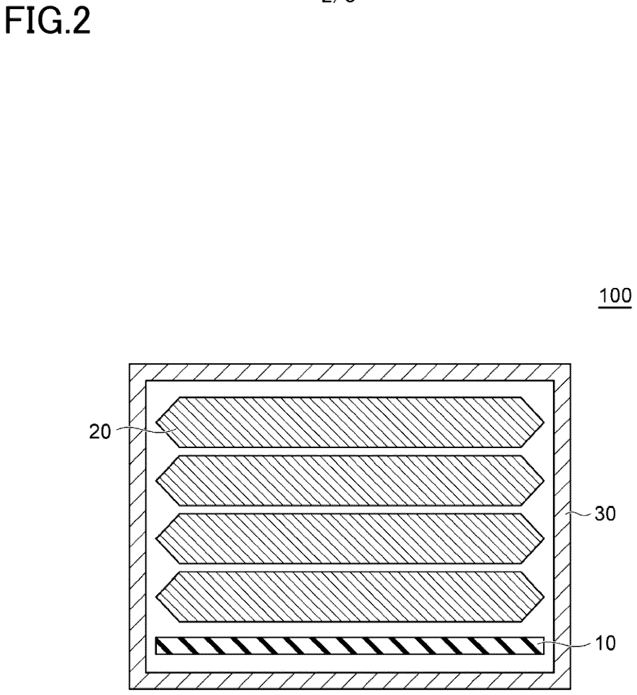

Fig. 2 is a schematic cross-sectional view of a battery pack according to an embodiment. In Fig. 2, the battery pack 100 includes a housing 30, and the above-described fire extinguishing body 10 and a plurality of pouch cells 20 disposed inside the housing 30. In Fig. 2, the fire extinguishing body 10 is provided at a location that can be easily externally accessed, so that it can be easily replaced.

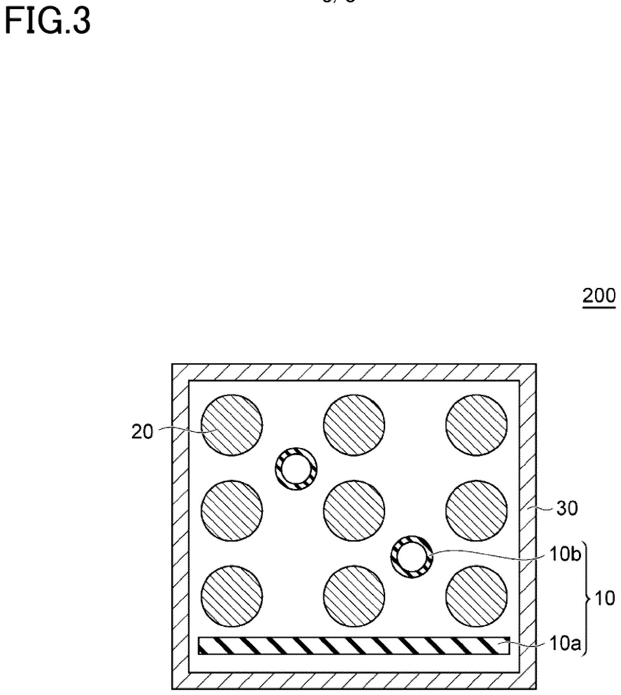

Fig. 3 is a schematic cross-sectional view of a battery pack according to another embodiment. In Fig. 3, the battery pack 200 includes a housing 30, and above-described fire extinguishing bodies 10 and cylindrical cells 20 disposed inside the housing 30. The fire extinguishing bodies 10 include a fire extinguishing body 10a provided at the bottom of the housing 30, and a fire extinguishing body 10b obtained by rolling up the fire extinguishing body 10 into a cylindrical shape and provided in a space between adjacent cylindrical cells. In Fig. 3, these fire extinguishing bodies 10 are provided at locations that can be easily externally accessed, so that they can be easily replaced.

The one or more fire extinguishing bodies in the battery pack may not necessarily be provided at a location that can be easily externally accessed and are only needed to be provided at a location into which the fire extinguishing body can be loaded and from which the fire extinguishing body can be removed. For example, in the case of the battery pack 100, the fire extinguishing body 10 may also be provided between two adjacent pouch cells 20.

The description has been provided of the case where the fire extinguishing body is a laminate including a flat (film-like) substrate and a fire extinguishing agent-containing layer formed on the substrate. However, the fire extinguishing body may have a core-sheath structure including a columnar (cylindrical or prismatic) substrate and a fire extinguishing agent-containing layer formed on the substrate.

### Examples

Although the present invention will be described in greater detail using the following examples, the present invention is not limited to these examples.

### <Preparation of materials>

- Film substrate: LLDPE (manufactured by Mitsui Chemicals Tohcello, Inc., thickness: 30 µm, brand: MC-S, used in Example 1)
- Film substrate: LLDPE (manufactured by Mitsui Chemicals Tohcello, Inc., thickness: 12 µm, brand: MCS, used in Comparative Example 2)
- Film substrate: PET (manufactured by Toray Industries, Inc., thickness: 50 µm, brand: Lumirror S10)
- Film substrate: ETFE (manufactured by AGC Inc., thickness: 50 µm, brand: AFLEX)
- Rigid base plate: wood (teak, thickness: 5 mm)
- Rigid base plate: iron (thickness: 5 mm)
- Rigid base plate: SUS430 (thickness: 5 mm)
- Rigid base plate: cemented carbide (manufactured by Nippon Tungsten Co., Ltd., brand: UM-10, thickness: 5 mm)
- Fire extinguishing agent: ABC fire extinguishing agent (manufactured by MORITA MIYATA CORPORATION)
- Binder resin: Epoxy resin and epoxy resin curing agent

### <Production of fire extinguishing body>

### [Example 1]

The binder resin was added to the fire extinguishing agent to prepare a coating solution, and the coating solution was applied to the film substrate (resin layer) and dried at 90°C for two minutes. Thus, a fire extinguishing body including the film substrate and a fire extinguishing agent-containing layer thereon was obtained. The thickness of the fire extinguishing agent-containing layer was 200 µm.The fire extinguishing agent-containing layers were formed in the same manner regardless of the size thereof.

The Young's modulus of the substrate was measured as follows. In the case where only the fire extinguishing agent-containing layer was included in the layer configuration (comparative example 1), the Young's modulus of the fire extinguishing agent-containing layer was measured in accordance with a method of measuring the resin layer. The Young's modulus of the fire extinguishing agent-containing layer itself was 1 MPa.
Resin layer: measured in accordance with ASTM-D-882
Rigid base plate (wood, metal): measured in accordance with JIS-Z-2280

### [Examples 2 and 3]

Fire extinguishing bodies were produced in the same manner as Example 1, except that layer configurations were changed as indicated in Table 1.

### [Example 4]

Fire extinguishing agent-containing layers having a thickness of 200 µm were formed on respective film substrates in the similar manner as Example 1. Then, the rigid base plate and each film substrate were bonded to each other with an adhesive tape (thickness: 50 µm) to obtain fire extinguishing bodies.

### [Examples 5 to 7]

Fire extinguishing bodies were produced in the same manner as Example 4, except that layer configurations were changed as indicated in Table 1.

### [Example 8]

Cylindrical fire extinguishing bodies were each obtained by rolling up the fire extinguishing body of Example 3 into a cylindrical shape.

### [Example 9]

Fire extinguishing agent-containing layers having a thickness of 200 µm were formed on respective film substrates in the same manner as Example 7. The resulting laminates were each rolled up into a cylindrical shape and wrapped around the rigid base plate processed into a cylindrical shape, to obtain fire extinguishing bodies.

### [Comparative example 1]

The binder resin was added to the fire extinguishing agent to prepare coating solutions, and these coating solutions were applied to respective silicone release agent-coated PET films (manufactured by Toyobo Co., Ltd.) and dried at 90°C for two minutes. Thus, fire extinguishing agent-containing layers were formed on the respective films. By releasing only the fire extinguishing agent-containing layer from each film, single-layer fire extinguishing agent-containing layers were obtained. The thickness of each fire extinguishing agent-containing layer was 200 µm.

### [Comparative example 2]

Fire extinguishing bodies were produced in the same manner as Example 1, except that a layer configuration was changed as indicated in Table 1.

### <Evaluation of loading and removal of fire extinguishing body>

### [Small battery pack of cylindrical cells]

Small battery packs of cylindrical cells (housing size: a cube of 70 mm in length × 70 mm in width × 70 mm in height) were prepared. It was checked whether fire extinguishing bodies produced in the examples were damaged when they were loaded into respective ones of the battery packs and removed therefrom. Results are shown in Table 1. Note that the plate-like fire extinguishing bodies were provided at the bottom of respective ones of the battery packs as with the fire extinguishing body 10a illustrated in Fig. 3. The cylindrical fire extinguishing bodies were provided in respective spaces between adjacent cells as with the fire extinguishing bodies 10b illustrated in Fig. 3.

### [Large battery pack of pouch cells]

Large battery packs of pouch cells (housing size: a cuboid of 210 mm in length × 180 mm in width × 115 mm in height) were prepared. It was checked whether fire extinguishing bodies produced in the examples were damaged when they were loaded into respective ones of the battery packs and removed therefrom. Results are shown in Table 1. Note that the fire extinguishing bodies were provided at the bottom of the respective battery packs as with the fire extinguishing body 10 illustrated in Fig. 2.

**[Table 1]**

| | Configuration of fire extinguishing body | | | | | | Evaluation result | | |
|---|---|---|---|---|---|---|---|---|---|
| | Base material | | | | Fire extinguishing agent-containing layer | Shape of fire extinguishing body | Battery pack | Whether or not there is damage | |
| | Rigid substrate | | Film base material | | | | | Upon loading | Upon ejection |
| | Rigid base plate | Young's modulus | Film substrate | Young's modulus | | | | | |
| Comp. Ex. 1 | - | - | - | - | Included | Plate | Small | Damaged | Damaged |
| | - | - | - | - | Included | Plate | Large | Damaged | Damaged |
| Comp. Ex. 2 | - | - | LLDPE | 1.5 MPa | Included | Plate | Small | Not damaged | Damaged |
| | - | - | LLDPE | 1.5 MPa | Included | Plate | Large | Damaged | Damaged |
| Ex. 1 | - | - | LLDPE | 2.0 MPa | Included | Plate | Small | Not damaged | Not damaged |
| | - | - | LLDPE | 2.0 MPa | Included | Plate | Large | Not damaged | Not damaged |
| EX. 2 | - | - | PET | 4 GPa | Included | Plate | Small | Not damaged | Not damaged |
| | - | - | PET | 4 GPa | Included | Plate | Large | Not damaged | Not damaged |
| EX. 3 | - | - | ETFE | 2.6 GPa | Included | Plate | Small | Not damaged | Not damaged |
| | - | - | ETFE | 2.6 GPa | Included | Plate | Large | Not damaged | Not damaged |
| EX. 4 | Wood | 13 GPa | PET | 4 GPa | Included | Plate | Small | Not damaged | Not damaged |
| | Wood | 13 GPa | PET | 4 GPa | Included | Plate | Large | Not damaged | Not damaged |
| EX. 5 | Iron | 205 GPa | PET | 4 GPa | Included | Plate | Small | Not damaged | Not damaged |
| | Iron | 205 GPa | PET | 4 GPa | Included | Plate | Large | Not damaged | Not damaged |
| EX. 6 | SUS430 | 200 GPa | PET | 4 GPa | Included | Plate | Small | Not damaged | Not damaged |
| | SUS430 | 200 GPa | PET | 4 GPa | Included | Plate | Large | Not damaged | Not damaged |
| EX. 7 | Cemented carbide alloy | 640 GPa | PET | 4 GPa | Included | Plate | Small | Not damaged | Not damaged |
| | Cemented carbide alloy | 640 GPa | PET | 4 GPa | Included | Plate | Large | Not damaged | Not damaged |
| EX. 8 | - | - | ETFE | 2.6 GPa | Included | Cylinder | Small | Not damaged | Not damaged |
| | - | - | ETFE | 2.6 GPa | Included | Cylinder | Large | - | - |
| EX. 9 | Cemented carbide alloy | 640 GPa | PET | 4 GPa | Included | Cylinder | Small | Not damaged | Not damaged |
| | Cemented carbide alloy | 640 GPa | PET | 4 GPa | Included | Cylinder | Large | - | - |

### [Industrial Applicability]

A fire extinguishing body of the present invention can be easily replaced even after being loaded into a battery pack. Thus, by replacing the fire extinguishing body every fixed number of years to ensure the fire extinguishing performance, a safer battery pack can be provided.

### [Reference Signs List]

- 1: Substrate
- 2: Fire extinguishing agent-containing layer
- 10: Fire extinguishing body
- 20: Cell
- 30: Housing
- 100, 200: Battery pack

## Claims

1. A fire extinguishing body comprising:
a substrate; and
a fire extinguishing agent-containing layer facing the substrate,
the substrate having a Young's modulus of 2 MPa or more.

2. The fire extinguishing body according to claim 1,
wherein the substrate includes a resin layer.

3. The fire extinguishing body according to claim 2,
wherein the resin layer has a Young's modulus of 2 MPa to 5 GPa.

4. The fire extinguishing body according to any one of claims 1 to 3,
wherein the substrate includes at least one of a wood layer, a metal layer, and a glass layer.

5. The fire extinguishing body according to claim 4,
wherein each of the wood layer, the metal layer, and the glass layer has a Young's modulus of 10 to 700 GPa.

6. A battery pack comprising:
a housing;
a fire extinguishing body according to any one of claims 1 to 5; and
a battery,
the fire extinguishing body and the battery being disposed inside the housing.

7. The battery pack according to claim 6,
wherein the battery is a lithium-ion battery.
